# EUROPEAN PATENT SPECIFICATION

(11) **EP 1 737 162 B1**
(45) Date of publication and mention of the grant of the patent: **24.10.2012**
(21) Application number: 05736729.4
(22) Date of filing: 27.04.2005
(51) Int. Cl.: H04W 76/02

(54) **WIRELESS NODE APPARATUS AND MULTIHOP WIRELESS LAN SYSTEM**
DRAHTLOSE KNOTENVORRICHTUNG UND MULTIHOP-WLAN-SYSTEM
APPAREIL DE NOED SANS FIL ET SYSTÈME DE RÉSEAU LOCAL SANS FIL MULTI-SAUT

(30) Priority: 10.05.2004 JP 2004140193
(43) Date of publication of application: 27.12.2006
(73) Proprietor: Panasonic Corporation, Kadoma-shi Osaka 571-8501 (JP)
(72) Inventor: KAWAKAMI, Tetsuya., c/o Matsushita El.Ind.Co.Ltd, Osaka 540-6319 (JP)
(74) Representative: Grünecker, Kinkeldey, Stockmair & Schwanhäusser
(86) International application number: PCT/JP2005/008017
(87) International publication number: WO 2005/109765

(56) References cited:
- WO-A1-03/105502
- JP-A- 2001 237 764
- JP-A- 2003 309 508
- US-A1- 2003 179 742
- US-A1- 2004 023 651
- BANERJEE S ET AL: "A clustering scheme for hierarchical control in multi-hop wireless networks", PROCEEDINGS IEEE INFOCOM 2001. CONFERENCE ON COMPUTER COMMUNICATIONS. TWENTIETH ANNUAL JOINT CONFERENCE OF THE IEEE COMPUTER AND COMMUNICATIONS SOCIETY (CAT. NO.01CH37213); [PROCEEDINGS IEEE INFOCOM. THE CONFERENCE ON COMPUTER COMMUNICATIONS], PISCAT, vol. 2, 22 April 2001 (2001-04-22), pages 1028-1037, XP010538791, DOI: DOI:10.1109/INFCOM.2001.916296 ISBN: 978-0-7803-7016-6

## Description

The present invention relates to a wireless node apparatus and a multihop wireless LAN system, which are designed to carry out a re-connection at a disconnection from a multihop wireless LAN.

So far, a wireless LAN has been expected as an approach to speeding-up of mobile communication. A method of setting up a multihop wireless network between wireless nodes has been known as one approach to enlarging a service providing area in a systemhaving a smaller communication area of a base station (which will hereinafter be referred to equally as an AP (Access Point)) in comparison with a mobile communication such as PDC (personal Digital Cellular). According to the method disclosed in the following patent document 1, on the assumption that a communication of each wireless node with a base station in a star network requires only an establishment of a relay route up to the base station by each wireless node, there is made a structure in which the base station is set as a highest-order station between the base station and a wireless node and each wireless node uniquely determines a host connection-accepting wireless node. Moreover, instead of a method in which the highest-order station (base station) controls wholly the construction of a star multihop wireless network, there is disclosed a method of autonomously realizing a multihop wireless network in a manner such that, on the basis of the number of hops from the base station, each wireless node selects a host wireless node, which minimizes the number of hops up to the base station, as an optimum connection-accepting wireless node.

In addition, in a case in which the connection with the host connection-accepting wireless node fails after the construction of a network, according to patent document 1, there are disclosed a mode in which, except a child wireless node (wireless node to which it has a connection as a host connection-accepting wireless node), a host connection-accepting wireless node is selected so as to re-configure a multihop wireless network and a mode in which a connection impossibility signal to the effect of a failure of the connection with the host connection-accepting wireless node is transmitted and, upon receipt of this signal, the child wireless node transmits, to a child wireless node thereof, a connection impossibility signal to the effect that this wireless node has failed to establish a connection with the host connection-accepting wireless node and, through the repeated implementation of this operation, all the subordinate wireless nodes select a new host connection-accepting wireless node. This enables only the wireless node which cannot make a connection with the host connection-accepting wireless node to select a new host connection-accepting wireless node and further enables all the subordinate wireless nodes to resume the selection of the host connection-accepting wireless node, thereby achieving the dynamic re-construction.
Patent Document 1 : Japanese Patent Application Publication No. 2001-237764

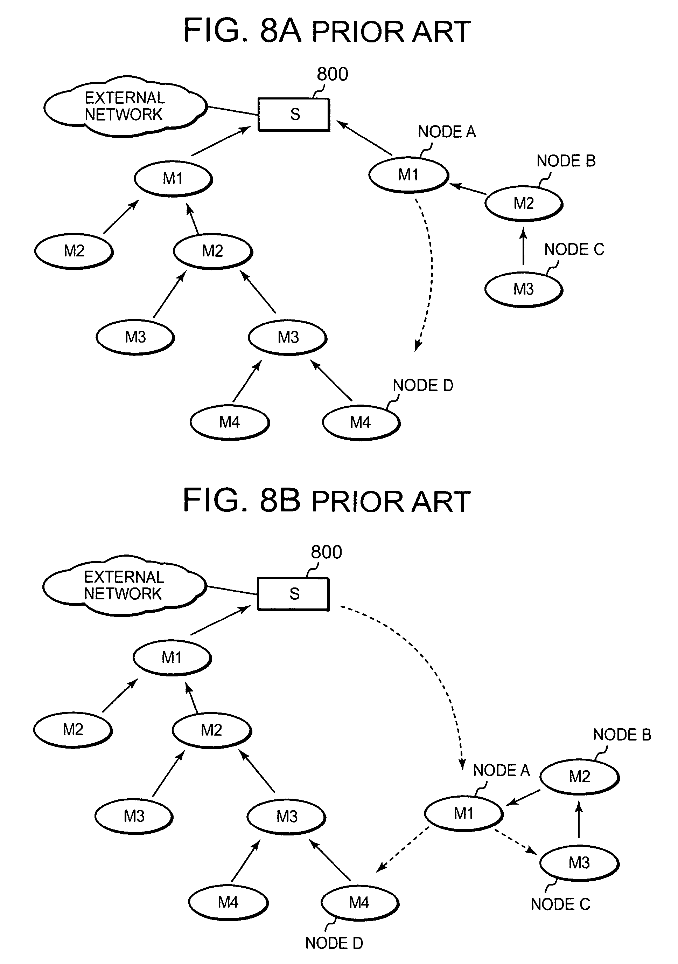

However, in a case in which the re-construction is made with all the wireless nodes as disclosed in the patent document 1, when the connection of a wireless node close to a base station is cut off, the re-connection processing takes place in an extremely large number of wireless nodes and the re-construction takes a long time. Moreover, since the tree structure under the wireless node disconnected cannot be maintained, even if a LAN type network is set up, difficulty is encountered in making a communication between the wireless nodes under that wireless node. Still moreover, according to the method disclosed in the patent document 1, in a case in which only the wireless node disconnected selects a host connection-accepting wireless node, even if the information on the number of hops is received from a child wireless node, this information is destroyed, thereby preventing a construction of a loop by a connection with a child wireless node. Yet moreover, although it is also considerable that a grandchild wireless node (lower-order wireless node connected to the child wireless node) is selected as a new host connection-acceptable wireless node, there exists a description to the effect that, in the case of the configuration of the method disclosed in the patent document 1 in which, of connection-possible wireless nodes, a wireless node having a minimum number of hops is selected as a host connection-acceptable wireless node, there is no danger because a connection between this wireless node and the grandchild wireless node is impossible. However, the cases shown in FIGs. 8A and 8B are considerable as the case of the occurrence of a loop. In FIGs. 8A and 8B, the figure portions of M1, M2, M3 and M4 allocated to the respective nodes designate the numbers of hops from a base station 800.

In a case in which, due to the movement of nodes A, B and C, the node A is disconnected from the base station 800, the node A tries to select a new connection-accepting one. At this time, there are the nodes B, C and D as nodes connectable to the node A. The node B is its own child wireless node and is out of selection. Since the node C notifies the number of hops = 3 to the node A while the node D notifies the number of hops = 4 thereto, the node C is selected in the case of the selection based on the minimum number of hops. Accordingly, a loop occurs among the nodes A, B and C and, hence, the prevention of the occurrence of a loop becomes impossible. In this case, although the number of hops is large, the connection with the node D is required for re-construction of a tree up to the base station 800. As described above, the method disclosed in the patent document 1 creates a problem at the re-construction of a network.

A radio frequency network which is constituted of a gateway, bridges and terminals is disclosed in US 2004/0023651 A1 . This radio frequency network has a tree structure with the gateway as a root. The gateway is assigned an "ATTACHED" status and it broadcasts a "HELLO" packet containing information for unattached bridges. The unattached bridges are in a "LISTEN" state instead, and subsequently attach to the root or other bridges which have been previously attached and broadcast "HELLO" packets by choosing a connection with a lowest number of hops to the root.

A solution for cluster creation of nodes is disclosed in Banerjee et al. (XP010538791). Here each node transmits a tree discovery beacon, which indicates its shortest hop distance to the root. If a neighbour of this node, on receiving this beacon, discovers a shorter path to the root via this node, it will update its hop-distance appropriately and choose this the node to be its parent in the tree.

### DISCLOSURE OF THE INVENTION

The present invention has been developed with a view to solving the above-mentioned problems, and it is an object of the invention to provide a wireless node apparatus and multihop wireless LAN system capable of avoiding the occurrence of a loop and re-constructing a tree while maintaining a tree structure of its own subordinates even in the case of a disconnection from a host connection-accepting wireless node.

This is achieved by the features of the independent claim. . This configuration can distinguish between the wireless node apparatus disconnected from the root wireless node apparatus and the wireless node connected thereto, which enables the re-connection to a subordinate of the root wireless node apparatus while preventing the occurrence of a loop.

. This configuration enables a preferential connection to the tree of the root wireless node apparatus and can prevent a mistaken establishment of a loop at a connection between the wireless node apparatus disconnected from the root wireless node apparatus.

Still additionally, a preferred mode of the present invention is that the wireless node apparatus according to the present invention further comprises disconnection notifying means for, when the recognizing means recognizes a disconnection from the multihop wireless LAN connected to the external network, notifying a disconnection notification packet to the effect of the disconnection to a wireless node apparatus connected to a subordinate. This configuration enables the disconnection from the root wireless node apparatus to be promptly communicated to a subordinate wireless node apparatus and enhances the connectivity to the tree of the root wireless node apparatus at a connection of the other wireless node apparatus.

Yet additionally, a preferred mode of the present invention is that the wireless node apparatus according to the present invention further comprises changing means for, upon receipt of the disconnection notification packet, changing only the state flag information of the information on the number of hops and the state flag stored in the storing means. This configuration can maintain the hierarchical relation in a wireless node apparatus group forming a leaf after the disconnection and maintain a communication between the disconnected wireless node apparatus.

Furthermore, in accordance with the present invention, there is provided a multihop wireless LAN system including a plurality of the above wireless node apparatuses and having a tree structure, capable of making a multihop communication through layer 2 in a state where at least a portion of the plurality of wireless node apparatus serves as a relay apparatus, wherein the tree structure has a root wireless node apparatus being positioned at a vertex of a tree structure and being capable to connect to an external network. . This configuration can distinguish between the wireless node apparatus disconnected from the root wireless node apparatus and the wireless node connected thereto, which enables the re-connection to a subordinate of the root wireless node apparatus while preventing the occurrence of a loop.

In addition, a preferred mode of the multihop wireless LAN system according to the present invention is that, on the basis of the collected information on the number of hops and the state flag, in a case in which wireless node apparatus connected to the multihop wireless LAN connected to the external network exist, the wireless node apparatus selects, of the wireless node apparatus, a wireless node apparatus having a minimum number of hops and, in a case in which no wireless node apparatus connected to the multihop wireless LAN connected to the external network exist, the wireless node apparatus selects, of the wireless node apparatus having a smaller number of hops than the number of hops stored in its own storing means, a wireless node apparatus having the smallest number of hops. This configuration enables a preferential connection to the tree of the root wireless node apparatus and can prevent a mistaken establishment of a loop at a connection between the wireless node apparatus disconnected from the root wireless node apparatus.

Still additionally, a preferred mode of the multihop wireless LAN system according to the present invention is that, when recognizing a disconnection from the multihop wireless LAN connected to the external network, the wireless node apparatus notifies a disconnection notification packet to the effect of the disconnection to a wireless node apparatus connected to a subordinate. This configuration enables the disconnection from the root wireless node apparatus to be promptly communicated to a subordinate wireless node apparatus and enhances the connectivity to the tree of the root wireless node apparatus at a connection of the other wireless node apparatus.

Yet additionally, a preferred mode of the multihop wireless LAN system according to the present invention is that, upon receipt of the disconnection notification packet, the wireless node apparatus changes only the state flag information of the information on the number of hops and the state flag stored in its own storing means. This configuration can maintain the hierarchical relation in a wireless node apparatus group forming a leaf after the disconnection and maintain a communication between the disconnected wireless node apparatus.

The wireless node apparatus and multihop wireless LAN system according to the present invention have the above-described configuration whereby it is possible to avoid a loop and re-construct a tree while maintaining a tree structure of its own subordinates even in the case of a disconnection with a host connection-accepting wireless node.

[FIG. 1] An illustration of a configuration of a wireless node apparatus according to an embodiment of the present invention.
[FIG. 2] An illustration for explaining the number of hops and a state flag in a wireless node apparatus according to an embodiment of the present invention.
[FIG. 3] A flow chart for explaining a processing flow for selection of a host connection-accepting wireless node apparatus in a wireless node apparatus according to an embodiment of the present invention.
[FIG. 4] A flow chart for explaining a disconnection notification processing flow in a wireless node apparatus according to an embodiment of the present invention.
[FIG. 5] An illustration of a configuration of a multihop wireless LAN system according to an embodiment of the present invention and an illustration of a tree before a disconnection of a wireless node apparatus from a multihop wireless LAN connected to an external network.
[FIG. 6] An illustration of a configuration of a multihop wireless LAN system according to an embodiment of the present invention and an illustration of a tree at a disconnection of a wireless node apparatus from a multihop wireless LAN connected to an external network.
[FIG. 7] An illustration of a configuration of a multihop wireless LAN system according to an embodiment of the present invention and an illustration of a tree at a re-connection of a wireless node apparatus to a multihop wireless LAN connected to an external network.
[FIG. 8A] An illustration of a multihop wireless LAN before a disconnection of a wireless node apparatus from a conventional multihop wireless LAN.
[FIG. 8B] An illustration of a multihop wireless LAN at a re-connection of a wireless node apparatus disconnected from a conventional multihop wireless LAN.

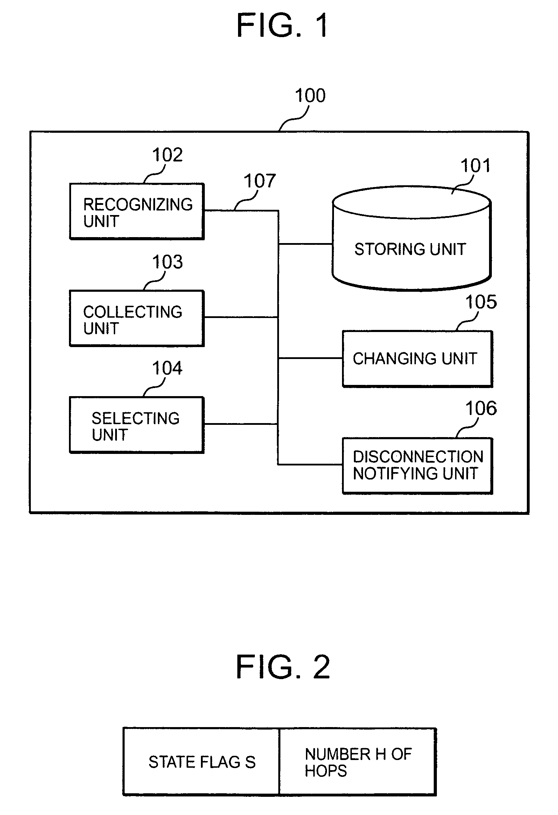

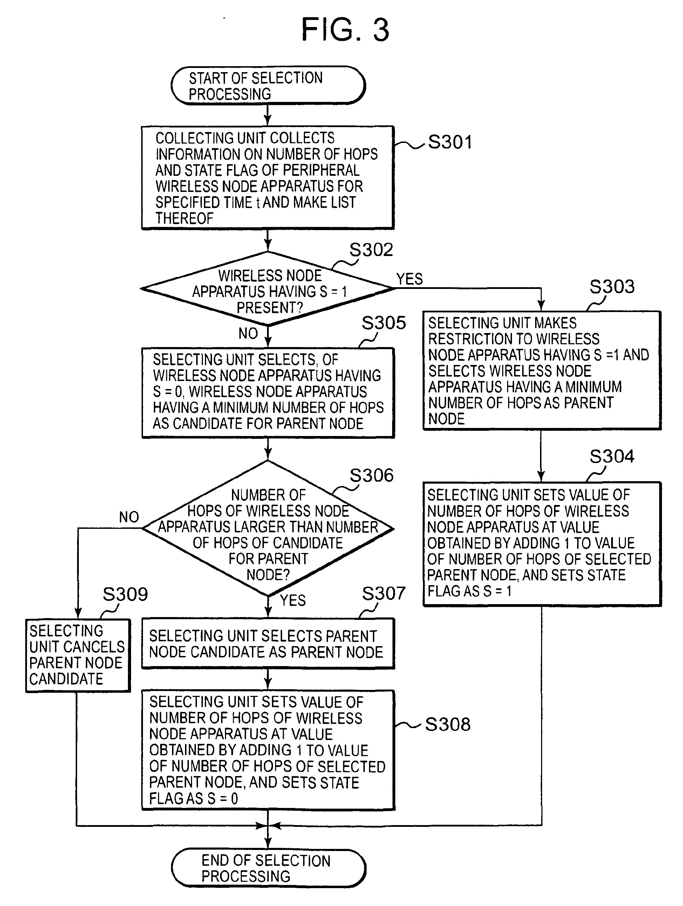

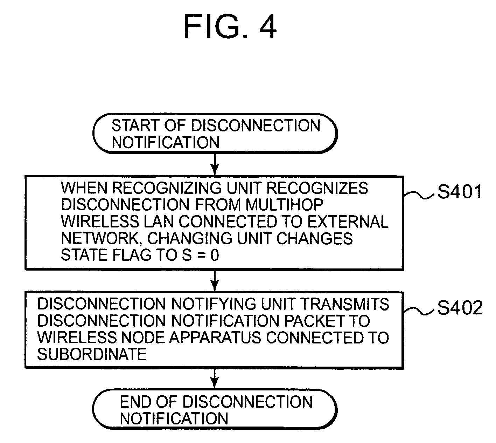

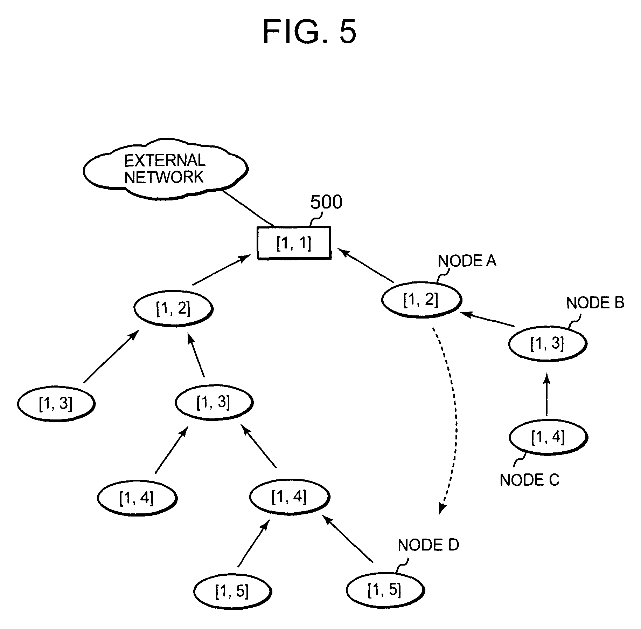

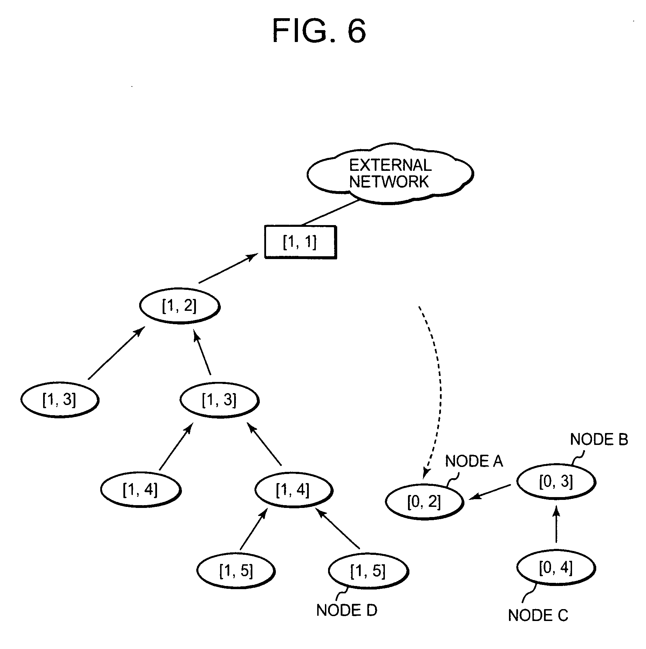

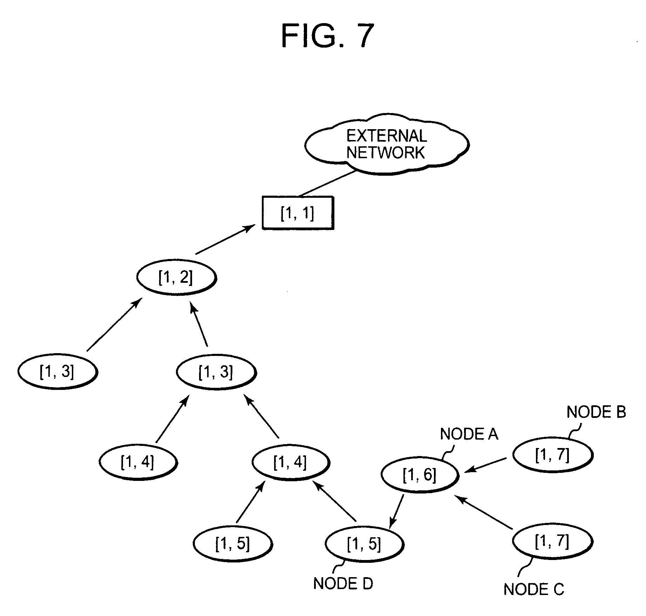

Referring to FIGs. 1 to 7, a description will be given hereinbelow of a wireless node apparatus and multihop wireless LAN system according to an embodiment of the present invention. FIG. 1 is an illustration of a configuration of a wireless node apparatus according to an embodiment of the present invention. FIG. 2 is an illustration for explaining the number of hops and a state flag in the wireless node apparatus according to the embodiment of the present invention. FIG. 3 is a flow chart for explaining a processing flow for selection of a host connection-accepting wireless node apparatus in the wireless node apparatus according to the embodiment of the present invention. FIG. 4 is a flow chart for explaining a disconnection notification processing flow in the wireless node apparatus according to the embodiment of the present invention. FIG. 5 is an illustration of a configuration of a multihop wireless LAN system according to the embodiment of the present invention and an illustration of a tree before a disconnection of a wireless node apparatus from a multihop wireless LAN connected to an external network. FIG. 6 is an illustration of a configuration of a multihop wireless LAN system according to the embodiment of the present invention and an illustration of a tree at a disconnection of a wireless node apparatus from a multihop wireless LAN connected to an external network. FIG. 7 is an illustration of a configuration of a multihop wireless LAN system according to the embodiment of the present invention and an illustration of a tree at a re-connection of a wireless node apparatus to a multihop wireless LAN connected to an external network.

First of all, a configuration of a wireless node apparatus according to an embodiment of the present invention will be described with reference to FIG. 1. As shown in FIG. 1, a wireless node apparatus 100 is made up of a storing unit 101, a recognizing unit 102, a collecting unit 103, a selecting unit 104, a changing unit 105 and a disconnection notifying unit 106. These units are connected through a bus 107 or the like. Moreover, the wireless node apparatus 100 has an interface, not shown, for making a communication with the external. Still moreover, the wireless node apparatus 100 stores, in its predetermined storage area, a control program for controlling an operation of each unit. The storing unit 101 corresponds to, for example, HDD, ROM, RAM or the like. The recognizing unit 102, the collecting unit 103, the selecting unit 104, the changing unit 105 and the disconnection notifying unit 106 correspond to, for example, a CPU or the like.

The storing unit 101 stores information on the number of hops when counted from a root wireless node apparatus (which will hereinafter be referred to equally as a root node) positioned at a vertex of a multihop wireless LAN having a tree structure and information on a state flag indicative of whether or not the wireless node apparatus is connected to a multihop wireless LAN (which will hereinafter be referred to equally as a network) connected to an external network. The root node is a node connected to an external network and is manually set as a root node. The number of hops and the state flag will be described with reference to FIG. 2. The wireless node apparatus 100 according to an embodiment of the present invention uses the number of hops from the root node and the state flag at a selection of a host wireless node apparatus. The number of hops is incremented by one at every hop. The state flag indicates whether or not that wireless node apparatus is connected to a network of a tree of the root node and, when connected thereto, S = 1 while, when not connected thereto, S = 0. That is, the wireless node taking S = 1 is connectable through the multihop wireless LAN, to which it has a connection, to the external network. On the other hand, S = 0 signifies that a closed LAN is configured with only a wireless node constituting a multihop wireless LAN which has no connection to the external network. The number of hops is depicted with H and a state flag is denoted with S. As the initial values, the state flag S = 0 and the number of hops H = 0. With respect to only the root node, S = 1 and H = 1 are previously set as the initial values.

The recognizing unit 102 recognizes a connection state with respect to a multihop wireless LAN connected to the external network. That is, the recognizing unit 102 confirms whether the state flag stored in the aforesaid storing unit 101 is S = 0 or S = 1. When S = 1, the recognizing unit 102 recognizes that the wireless node apparatus 100 is connected to a multihop wireless LAN connected to the external network and, hence, the wireless node apparatus 100 does not conduct the processing to select a new connection-accepting wireless node apparatus as will be mentioned later. On the other hand, when S = 0, the recognizing unit 102 recognizes that the wireless node apparatus 100 is not connected to the multihop wireless LAN connected to the external network and, hence, the wireless node apparatus 100 carries out the processing to select the new connected-to wireless node apparatus on the basis of this recognition.

When the recognizing unit 102 recognizes a disconnection from the multihop wireless LAN connected to the external network, the collecting unit 103 collects information on the number of hops and a state flag from peripheral wireless node apparatus. More concretely, for example, the collecting unit 103 collects information on the number of hops and a state flag with respect to the peripheral wireless node apparatus for a specified period of time t set in advance and makes a list thereof. As the collecting method, it is appropriate that the peripheral wireless node apparatus periodically broadcast the information on the number of hops and a state flag as a beacon, or that the wireless node apparatus 100, which conducts the processing to select a host connection-accepting one, broadcasts a request for the acquisition of the information on the number of hops and the state flag so that the peripheral wireless node apparatus respond to this. The present invention is not limited to these methods. Moreover, the host connected-to node selection processing is periodically conducted in even the other wireless nodes, other than the wireless node apparatus 100, connected to the wireless node apparatus 100.

The selecting unit 104 selects a host connection-accepting wireless node apparatus on the basis of the information on the number of hops and the state flag collected by the collecting unit 103. Referring to FIG. 3, a description will be given hereinbelow of the processing for selecting a host connection-accepting wireless node apparatus. The collecting unit 103 collects information on the number of hops and a state flag with respect to the peripheral wireless node apparatus for a specified period of time t and makes a list thereof (step S301). After the formation of the list of the information on the number of hops and the state flag, the selecting unit 104 makes a decision as to whether or not there is a wireless node apparatus having the state flag S = 1 (step S302). If it exists, the selecting unit 104 makes a restriction to the wireless node apparatuses having S = 1 and selects a wireless node apparatus having a minimum number of hops as a parent node (host connection-accepting wireless node apparatus) (step S303). Moreover, the selecting unit 104 sets the value of the number of hops of the wireless node apparatus 100 to a value obtained by adding in to the number of hops the selected parent node has and, likewise, the state flag is set as S = 1 (step S304).

On the other hand, the absence of a wireless node apparatus having the state flag S = 1 signifies that a wireless node apparatus connected to the root node does not exist around. It is considered that this wireless node apparatus stands at S = 0 at this time. In this case, the selecting unit 104 selects, of the wireless node apparatus of S = 0, a wireless node apparatus having a minimum number of hops as a candidate for a parent node (step S305). Following this, the selecting unit 104 makes a comparison between the number of hops of the wireless node apparatus 100 and the number of hops of the candidate for a parent node. The selecting unit 104 makes a decision as to whether or not the number of hops of the wireless node apparatus 100 is larger than the number of hops of the parent node candidate (step S306). If larger, the selecting unit 104 selects the parent node candidate as a parent node (step S307). Moreover, the number of hops of the wireless node apparatus 100 is set at a value obtained by adding 1 to the number of hops of the selected parent node, and the state flag is set as S = 0 (step S308).

On the other hand, when the selecting unit 104 makes a decision that the number of hops of the wireless node apparatus 100 is smaller than the number of hops of the parent node candidate, the selecting unit 104 cancels the parent node candidate (step S309), and the processing comes to an end without selecting a host connection-accepting wireless node apparatus. Thus, the connection with a wireless node apparatus having the number of hops larger than that of the wireless node apparatus 100 does not take place, thereby preventing the occurrence of a loop. Moreover, this relates to a case in which only the wireless node apparatus having S=0 exists around, and if there exists a wireless node apparatus of S = 1 connected to the root node, the connection with the wireless node apparatus having a minimum number of hops is made irrespective of the number of hops with respect to the wireless node apparatus 100, which does not disturb the connection to the root node.

Furthermore, referring to FIG. 4, a description will be given hereinbelow of disconnection notification processing in the wireless node apparatus 100 according to an embodiment of the present invention in a case in which the wireless node apparatus 100 is disconnected from a multihop wireless LAN connected to an external network. When the recognizing unit 102 recognizes a disconnection with a multihop LAN (host connection-accepting wireless node) connected to the external network on the basis of an interruption of reception of a beacon or the like, the changing unit 105 changes the state flag to S = 0 (step S401). Following this, the disconnection notifying unit 106 transmits a disconnection notification packet to the effect of the disconnection for notifying the disconnection to wireless node apparatus connected to subordinates thereof (step S402). The wireless node apparatus, which has received the disconnection notification packet, also sets the state flag to S = 0 and then likewise conducts a disconnection notification, so the change of the state flag to S = 0 successively takes place up to the wireless node apparatus forming an end of the tree. Thus, the wireless node apparatus taking the state flag S = 1 disappears irrespective of the actual disconnection from the root node in the processing for the selection of a host connection-accepting wireless node apparatus, which can prevent a wireless node apparatus forming a leaf (subordinate) of the wireless node apparatus 100 from being selected as a host connection-accepting wireless node apparatus in error. Moreover, according to this disconnection notification, the changing unit 105 conducts only the change of the state flag to S = 0 without changing the number of hops. This can maintain the tree structure even in the wireless node apparatus group disconnected from the root node and can maintain the communication between the wireless node apparatuses in this group.

Moreover, referring to FIGs. 5 to 7, a description will be given hereinbelow of, in a wireless node apparatus according to an embodiment of the present invention, a re-construction of a multihop wireless LAN connected to an external network. FIG. 5 is an illustration of a configuration of a multihop wireless LAN system according to an embodiment of the present invention and an illustration of a tree before a disconnection of a wireless node apparatus from a multihop wireless LAN connected to an external network. FIG. 6 is an illustration of a configuration of a multihop wireless LAN system according to an embodiment of the present invention and an illustration of a tree at a disconnection of a wireless node apparatus from a multihop wireless LAN connected to an external network. FIG. 7 is an illustration of a configuration of a multihop wireless LAN system according to an embodiment of the present invention and an illustration of a tree at a re-connection of a wireless node apparatus to a multihop wireless LAN connected to an external network. With respect to [x, y] written in wireless nodes shown in FIGs. 5 to 7, x depicts a stage flag while y denotes the number of hops. In addition, in FIGs. 5 to 7, a wireless node apparatus will be explained simply as a node.

As shown in FIG. 5, a node A is connected to a root node 500 and is connected through a node B to a node C. At this time, as a result of movements of the node A and the nodes B and C connected thereto, the recognizing unit 102 of the node A recognizes a disconnection from the root node 500 to which it has had a connection as a host connected-to node up to that time. At this time, the changing unit 105 of the node A changes the state flag to S = 0, and the disconnection notifying unit 106 broadcasts a disconnection notification packet. Upon receipt of this disconnection notification packet, the node B recognizes the disconnection from the tree and, as well as the node A, changes the state flag to S = 0 and further broadcasts a disconnection notification packet. This causes the state flag of the node C to be changed to S = 0.

Since the change of only the state flags take place at this time, the tree structure of the nodes A, B and C is maintained so that the communication is feasible among the three nodes. Let it be assumed that, thereafter, the nodes A, B and C are disposed as shown in FIG. 6 as a result of further movements. In a case in which the host connection-accepting node selection processing by the node A is conducted before the host connection-accepting node selection processing by the node C, the selecting unit 104 selects the node D and the node C as candidates for a host connected-to node on the basis of a list of the information on the number of hops and the state flag made up by the collecting unit 103. At this time, with respect to the number H of hops, the node D stands at H = 5 while the node C has H = 4. Although the node C is smaller in number of hops than the node D, since the node D whose state flag is S = 1 has priority, the node A selects the node D as a host connection-accepting node. Subsequently, the host connection-accepting node selection processing in the nodes B and C makes a selection of the node A and, in consequence, a tree is constructed as shown in FIG. 7.

Each of the functional blocks used for the description of this embodiment is typically realized with an LSI which is an integrated circuit. Each of these functional blocks can individually be formed as one chip, or a portion of or all of the functional blocks can also be formed as one chip. In this case, although described as an LSI, it is referred to equally as IC, system LSI, super LSI or ultra LSI according to level of integration.

In addition, the technique for the formation of an integrated circuit is not limited to LSI, but it can also be realized with a dedicated circuit or a general-purpose processor. It is also acceptable to employ an FPGA (Field Programmable Gate Array) programmable after the production of an LSI or a reconfigurable processor capable of carrying out the configuration with respect to the connection and setting of circuit cells in the interior of the LSI.

Still additionally, if a technique for the formation of an integrated circuit to be replaced with the LSI appears owing to advance in semiconductor technology or a different technology derived therefrom, the functional blocks can naturally be integrated through the use of this technique.

A wireless node apparatus and multihop wireless LAN system according to the present invention can avoid the occurrence of a loop and re-configure a tree while maintaining a tree structure of its own subordinates even in the case of a disconnection from a host connection-accepting wireless node and, hence, they are useful for a wireless node apparatus, a multihop wireless LAN system and others which carry out re-connection at the disconnection from a multihop wireless LAN.

## Claims

1. A wireless node apparatus out of a plurality of wireless node apparatuses which are constituting a multihop wireless LAN system having a tree structure with a root wireless node apparatus, the root wireless node apparatus being positioned at a vertex of the tree and capable to connect to an external network, and the wireless node apparatus being capable of making a multihop communication through layer 2 in a state where at least a portion of said plurality of wireless node apparatuses serve as a relay apparatus and being **characterized by** comprising:
storage means (101) for storing information on the number of hops of the wireless node apparatus counted from said root wireless node apparatus and for storing information on a state flag indicating a connection state of said wireless node apparatus to said external network; recognizing means (102) for recognizing said connection state of said wireless node apparatus to said external network on the basis of said state flag stored in said storage means;
collecting means (103) for collecting information on the number of hops and on the state flag of peripheral wireless node apparatuses, if said recognizing means (102) recognizes a disconnection of said wireless node apparatus from said external network; and
selecting means (104)
for determining the existence of wireless node apparatuses connected to the external network on the basis of the state flag, out of the peripheral wireless node apparatuses,
for selecting out of the peripheral wireless node apparatuses, a wireless node apparatus having a minimum number of hops as a candidate of a new connection-accepting wireless node apparatus, if it is determined that no wireless node apparatus connected to the external network exists,
for comparing the number of hops stored in the storage means (101) with the number of hops of said candidate of the new connection-accepting wireless node apparatus, and
for selecting said candidate of the new connection-accepting wireless node apparatus as a new connection-accepting wireless node apparatus, in a case in which the number of hops of said candidate of the new connection-accepting wireless node apparatus is smaller than the number of hops stored in the storage means (101).

2. The wireless node apparatus according to claim 1, wherein if it is determined that wireless node apparatuses connected to the external network exist, the selecting means (104) are adapted to select the wireless node apparatus having a minimum number of hops as a new connection-accepting wireless node apparatus, out of the wireless node apparatuses connected to the external network.

3. The wireless node apparatus according to claim 1 or 2, further comprising
disconnection notifying means (106) for transmitting a disconnection notification packet to a subordinate wireless node apparatus, if said recognizing means recognizes a disconnection from said external network.

4. The wireless node apparatus according to claim 3, further comprising
changing means (105) for changing only the state flag information of the information on the number of hops and the state flag stored in said storing means (101) upon receipt of said disconnection notification packet.

5. A multihop wireless LAN system including a plurality of wireless node apparatuses according to any of the claims 1 to 4, the multihop wireless LAN system having a tree structure with a root wireless node apparatus being positioned at a vertex and being capable to connect to an external network and the plurality of wireless node apparatuses being capable of making a multihop communication through layer 2 in a state where at least a portion of said plurality of wireless node apparatuses serve as a relay apparatus.

## Patentansprüche

1. Eine drahtlose Knotenpunktvorrichtung aus einer Vielzahl von drahtlosen Knotenpunktvorrichtungen, welche ein drahtloses Multi-Hop LAN System konstituieren, welches eine Baumstruktur mit einer drahtlosen Hauptknotenpunktvorrichtung besitzt, wobei die drahtlose Hauptknotenpunktvorrichtung an einem Hauptknotenpunkt des Baumes positioniert ist und eingerichtet ist eine Verbindung mit einem externen Netzwerk herzustellen, und wobei die drahtlose Knotenpunktvorrichtung eingerichtet ist um eine Multi-Hop Kommunikation durch Schicht 2 durchzuführen in einem Zustand in dem mindestens ein Teil der genannten Vielzahl von drahtlosen Knotenpunktvorrichtungen als Verteilervorrichtung dienen, und **gekennzeichnet ist durch** das Beinhalten von:
Speichermittel (101) zur Speicherung von Information über die Anzahl der Hops der drahtlosen Knotenpunktvorrichtung, welche von der genannten drahtlosen Hauptknotenpunktvorrichtung gezählt werden, und zur Speicherung von Informationen einer Statusflag, welche einen Verbindungsstatus der genannten drahtlosen Knotenpunktvorrichtung mit dem genannten externen Netzwerk anzeigt, Erkennungsmittel (102) zur Erkennung des genannten Verbindungsstatus der genannten drahtlosen Knotenpunktvorrichtung mit dem genannten externen Netzwerk auf der Basis der genannten Statusflag, welche in dem genannten Speichermittel gespeichert wurde;
ein Sammelmittel (103) zum Sammeln von Informationen über die Anzahl der Hops und über die Statusflag von peripheren drahtlosen Knotenpunktvorrichtungen, wenn das genannte Erkennungsmittel (102) einen Verbindungsabbruch der genannten drahtlosen Knotenpunktvorrichtung von dem genannten externen Netzwerk erkennt; und
ein Auswahlmittel (104)
zur Bestimmung der Existenz von drahtlosen Knotenpunktvorrichtungen, welche mit dem externen Netzwerk verbunden sind, auf der Basis der Statusflag aus den peripheren drahtlosen Knotenpunktvorrichtungen,
zur Auswahl aus den peripheren drahtlosen Knotenpunktvorrichtungen wird eine drahtlose Knotenpunktvorrichtung mit einer minimalen Anzahl von Hops als ein Kandidat für eine neue verbindungsakzeptierende drahtlose Knotenpunktvorrichtung, wenn bestimmt wird, dass keine drahtlose Knotenpunktvorrichtung, welche mit dem externen Netzwerk verbunden ist, existiert,
zum Vergleichen der Anzahl der Hops, welche in dem Speichermittel (101) gespeichert sind, mit der Anzahl der Hops des genannten Kandidaten für eine neue verbindungsakzeptierende drahtlose Knotenpunktvorrichtung, und
zur Auswahl des genannten Kandidaten für eine neue verbindungsakzeptierende drahtlose Knotenpunktvorrichtung als eine neue verbindungsakzeptierende drahtlose Knotenpunktvorrichtung in einem Fall, in welchem die Anzahl der Hops des genannten Kandidaten für die neue verbindungsakzeptierende drahtlose Knotenpunktvorrichtung kleiner als die Anzahl der Hops ist, welche in dem Speichermittel (101) gespeichert wurde, ist.

2. Die drahtlose Knotenpunktvorrichtung nach Anspruch 1, wobei wenn bestimmt wurde, dass drahtlose Knotenpunktvorrichtungen, welche mit dem externen Netzwerk verbunden sind, existieren, das Auswahlmittel (104) eingerichtet ist um die drahtlose Knotenpunktvorrichtung als eine neue verbindungsakzeptierende drahtlose Knotenpunktvorrichtung aus den drahtlosen Knotenpunktvorrichtungen, welche mit dem externen Netzwerk verbunden sind, auszuwählen, welche eine minimale Anzahl von Hops besitzt.

3. Die drahtlose Knotenpunktvorrichtung nach Anspruch 1 oder 2, weiterhin umfassend
Unterbrechungsbenachrichtigungsmittel (106) zur Übertragung eines Verbindungsunterbrechungsbenachrichtigungspaketes zu einer untergeordneten drahtlosen Knotenpunktvorrichtung, wenn das genannte Erkennungsmittel eine Verbindungsunterbrechung von dem genannten externen Netzwerk erkennt.

4. Die drahtlose Knotenpunktvorrichtung nach Anspruch 3, weiterhin umfassend
ein Veränderungsmittel (105) zur Veränderung von nur der Statusflaginformation von der Information über die Anzahl der Hops und die Statusflag, welche in dem genannten Speichermittel (101) gespeichert wurden, sobald das genannte Verbindungsunterbrechungsbenachrichtigungspaket erhalten wurde.

5. Ein drahtloses Multi-Hop LAN System beinhaltend eine Vielzahl von drahtlosen Knotenpunktvorrichtungen nach einem der Ansprüche 1 bis 4, wobei das drahtlose Multi-Hop LAN System eine Baumstruktur mit einer drahtlosen Hauptknotenpunktvorrichtung besitzt, welche an einem Hauptknotenpunkt positioniert ist und eingerichtet ist um eine Verbindung mit einem externen Netzwerk herzustellen und die Vielzahl von drahtlosen Knotenpunktvorrichtungen eingerichtet sind um eine Multi-Hop Kommunikation durch Schicht 2 durchzuführen in einem Zustand, bei dem mindestens ein Teil von der genannten Vielzahl von drahtlosen Knotenpunktvorrichtungen als Verteilervorrichtung dienen.

## Revendications

1. Appareil de noeud sans fil parmi une pluralité d'appareils de noeuds sans fil qui constituent un système de réseau local, LAN, sans fil multi-saut ayant une structure arborescente avec un appareil de noeud sans fil racine, l'appareil de noeud sans fil racine étant disposé à un sommet de l'arborescence et étant capable de se connecter à un réseau externe, et l'appareil de noeud sans fil étant capable d'effectuer une communication multi-saut par une couche 2 dans un état dans lequel au moins une partie de ladite pluralité d'appareils de noeuds sans fil sert d'appareil de relais, et étant **caractérisé en ce qu'**il comprend :
- des moyens de stockage (101) pour stocker des informations sur le nombre de sauts de l'appareil de noeud sans fil, compté à partir dudit appareil de noeud sans fil racine, et pour stocker des informations sur un drapeau d'état indiquant un état de connexion dudit appareil de noeud sans fil audit réseau externe ;
- des moyens de reconnaissance (102) pour reconnaitre ledit état de connexion dudit appareil de noeud sans fil audit réseau externe en se fondant sur ledit drapeau d'état stocké dans lesdits moyens de stockage ;
- des moyens de recueil (103) pour recueillir des informations sur le nombre de sauts et sur le drapeau d'état d'appareils de noeuds sans fil périphériques, si lesdits moyens de reconnaissance (102) reconnaissent une déconnexion dudit appareil de noeud sans fil dudit réseau externe ; et
- des moyens de sélection (104) :
- pour déterminer l'existence d'appareils de noeuds sans fil connectés au réseau externe, en se fondant sur le drapeau d'état, parmi les appareils de noeuds sans fil périphériques ;
- pour sélectionner, parmi les appareils de noeuds sans fil périphériques, un appareil de noeud sans fil ayant le nombre minimum de saut comme candidat pour un nouvel appareil de noeud sans fil acceptant une connexion, s'il est déterminé qu'il n'existe aucun appareil de noeud sans fil connecté au réseau externe ;
- pour comparer le nombre de sauts stocké dans les moyens de stockage (101) avec le nombre de sauts dudit candidat pour le nouvel appareil de noeud sans fil acceptant une connexion ; et
- pour sélectionner ledit candidat pour le nouvel appareil de noeud sans fil acceptant une connexion comme étant un nouvel appareil de noeud sans fil acceptant une connexion, dans le cas où le nombre de sauts dudit candidat pour le nouvel appareil de noeud sans fil acceptant une connexion serait inférieur au nombre de sauts stocké dans les moyens de stockage (101).

2. Appareil de noeud sans fil selon la revendication 1, dans lequel, s'il est déterminé que des appareils de noeuds sans fil connectés au réseau externe existent, les moyens de sélection (104) sont adaptés à sélectionner l'appareil de noeud sans fil ayant le nombre minimum de saut comme un nouvel appareil de noeud sans fil acceptant une connexion, parmi les appareils de noeuds sans fil connectés au réseau externe.

3. Appareil de noeud sans fil selon la revendication 1 ou 2, comprenant en outre :
- des moyens de notification de déconnexion (106) pour transmettre un paquet de notification de déconnexion à un appareil de noeud sans fil subordonné, si lesdits moyens de reconnaissance reconnaissent une déconnexion dudit réseau externe.

4. Appareil de noeud sans fil selon la revendication 3, comprenant en outre :
- des moyens de changement (105) pour ne changer que les informations de drapeau d'état des informations sur le nombre de sauts et sur le drapeau d'état stockées dans lesdits moyens de stockage (101), à la réception dudit paquet de notification de déconnexion.

5. Système de réseau local, LAN, sans fil multi-saut incluant une pluralité d'appareils de noeuds sans fil selon l'une quelconque des revendications 1 à 4, le système LAN sans fil multi-saut ayant une structure arborescente avec un appareil de noeud sans fil racine disposé à un sommet et étant capable de se connecter à un réseau externe, et la pluralité d'appareils de noeuds sans fil étant capable d'effectuer une communication multi-saut par une couche 2 dans un état dans lequel au moins une partie de ladite pluralité d'appareils de noeuds sans fil sert d'appareil de relais.
